# FASCICULE DE BREVET EUROPEEN

(11) **EP 1 372 379 B1**
(45) Date de publication et mention de la délivrance du brevet: **28.07.2004**
(21) Numéro de dépôt: 02724394.8
(22) Date de dépôt: 02.04.2002
(51) Int. Cl.: A01K 11/00

(54) **ETIQUETTE AURICULAIRE DE MARQUAGE DES ANIMAUX AVEC SYSTEME DE PRELEVEMENT DE MATIERE ORGANIQUE**
TIEROHRMARKE MIT GEWEBEPROBEENTNAHMEVORRICHTUNG
EAR TAG FOR MARKING ANIMALS WITH ORGANIC SUBSTANCE SAMPLING SYSTEM

(30) Priorité: 04.04.2001 FR 0104570
(43) Date de publication de la demande: 02.01.2004
(73) Titulaire: CHEVILLOT SA, F-81011 Albi Cédex 9 (FR)
(72) Inventeur: DESTOUMIEUX, Jean-Jacques, F-81380 Lescure d'Albigeois (FR)
(74) Mandataire: Ravina, Bernard
(86) Numéro de dépôt international: PCT/FR2002/001127
(87) Numéro de publication internationale: WO 2002/080661

(56) Documents cités:
- EP-A- 1 060 662
- WO-A-99/61882
- DE-A- 19 740 429

## Description

Les étiquettes auriculaires également dénommées boucles comprennent généralement une paroi avec une tête femelle et une paroi avec un poinçon mâle, lesdites parois étant porteuses des indications d'identification.
Lors de la mise en place, au moyen d'une pince, le poinçon mâle perce l'oreille de l'animal et se loge dans la tête femelle où il est sécurisé, en sorte de ne pas pouvoir être séparé de la tête femelle. Sa rigidité nécessaire est assurée par le pointeau de la pince qui se loge dans le fût creux du poinçon. Ce poinçon est en général fermé.

Généralement, les têtes femelles assurant la meilleure garantie d'inviolabilité de l'assemblage réalisé et donc l'inviolabilité du marquage réalisé sont des têtes fermées.

Les têtes fermées n'ont qu'un seul orifice, celui par lequel pénètre le poinçon qui est sécurisé en position, de manière connue, par un épaulement radial, en arrière de son extrémité pointue, distale par rapport à l'étiquette dont il est une partie non distincte.
L'épaulement du poinçon se bloque dans la tête femelle munie de nervures, dents ou autre moyen qui n'empêchent pas la pénétration du poinçon, mais qui empêchent son retrait.

Dans une forme particulièrement élaborée d'étiquette ou boucle auriculaire, la tête femelle fermée est réalisée en une matière synthétique, surmoulée sur la paroi et possédant une dureté shore telle qu'il soit difficile de la percer ou couper pour exercer une action sur l'extrémité du poinçon en sorte de le faire sortir de la tête.

Actuellement, les étiquettes auriculaires les plus utilisées sont les boucles à tête fermée.

Il existe également sur le marché des étiquettes à tête ouverte, celles-ci présentant chacune un orifice de pénétration de la pointe avec épaulement du poinçon dans un logement tubulaire débouchant, c'est-à-dire présentant un orifice à son extrémité libre.

L'utilisation pour le marquage des animaux des étiquettes ou boucles auriculaires est une pratique généralisée dans tous les pays d'élevage pour assurer une traçabilité des animaux d'élevage destinés à la consommation humaine.

Ces marquages et les données relatives à l'animal sont généralement centralisés dans des banques de données par des systèmes informatiques et accessibles pour mise à jour ou information par tous les intervenants : l'éleveur naisseur, l'éleveur engraisseur, les services vétérinaires, etc... jusqu'aux réseaux de distribution.

La recherche d'un maximum de sécurité dans l'identification de l'animal conduit à effectuer des prélèvements de matières organiques qui peuvent être stockés en vue d'une analyse de l'ADN.

Le brevet WO 99 61882 cherche une solution dans ce sens et propose un dispositif et un procédé destinés à la prise d'échantillon de tissus organiques.
Ce brevet décrit un réceptacle pour l'échantillon et un outil de prélèvement qui est un emporte-pièce qui se bloque dans le réceptacle avec la matière organique prélevée.
Le réceptacle et l'emporte-pièce peuvent être associés à une étiquette auriculaire et présenter les mêmes marquages.

Bien que, dans ce brevet, il soit indiqué qu'il est possible de réaliser la prise de l'échantillon simultanément à la pose de l'étiquette auriculaire, aucune précision technique n'est apportée dans ce sens et il n'est pas évident que cela soit possible par une même action.

En tout état de cause, l'outil de prélèvement devant être porté par le poinçon d'une branche de la pince de pose de l'étiquette et le réceptacle par l'autre branche de la pince, une telle possibilité n'est valable que pour des étiquettes à tête ouverte pouvant être traversées par le porte poinçon de la pince et l'outil de prélèvement.
On sait que ce type d'étiquettes est peu sécuritaire et donc peu employé.

Le brevet DE 197 40 429 décrit un procédé et un dispositif voisin du précédent qui est également limité à l'emploi d'une étiquette à tête ouverte.

Le brevet EP 1 060 662 décrit une étiquette auriculaire du type susmentionné dans laquelle le poinçon mâle est doté à son extrémité d'une pièce tranchante circulaire et détachable du poinçon qui se loge dans un capsulage porté dans un perçage débouchant au dos de la tête femelle.

Le dispositif selon ce brevet n'est pas applicable à des étiquettes auriculaires à tête fermée.
En outre, le diamètre important de la pièce tranchante rend difficile la pénétration du poinçon mâle dans la paroi auriculaire.

La présente invention vise à réaliser une étiquette auriculaire ou boucle de marquage des animaux avec système de prélèvement et de conservation de matière organique qui permette la pose de l'étiquette et le prélèvement par une même opération, cette étiquette pouvant être du type à tête fermée ou indifféremment du type à tête ouverte.

Le prélèvement et le marquage par pose de la boucle s'effectuant simultanément, le risque de fausse affectation de prélèvement est écarté d'autant que selon l'invention, le poinçon mâle de fixation de la boucle dans la tête femelle participe directement au prélèvement.

A cet effet, l'étiquette auriculaire selon l'invention de marquage des animaux comprenant une partie femelle constituée par une tête femelle portée par ou formée dans une première paroi, une partie mâle constituée par un poinçon mâle porté par ou formé dans une seconde paroi, des moyens d'identification étant portés par l'un au moins des éléments mâle ou femelle, se caractérise essentiellement en ce que le poinçon mâle est conformé en deux éléments séparables, dont un se bloque dans la tête femelle et dont l'autre est un organe de prélèvement de matière organique lors du passage du poinçon mâle à travers la paroi auriculaire qui est mobile dans un canal axial du précédent et se retire à travers la paroi de la partie mâle après fixation de l'étiquette sur l'oreille de l'animal.

Suivant une autre caractéristique de l'invention :
- l'étiquette auriculaire comprend une partie femelle avec une tête femelle et une partie mâle avec un poinçon mâle, lesdites parties étant porteuses des indications d'identification,
- le poinçon mâle se loge de manière sécurisée après passage à travers l'oreille dans la tête femelle,
- le poinçon mâle est percé d'un canal axial débouchant sur la paroi et en extrémité du poinçon,
- l'extrémité du poinçon est conformée en un emporte pièce,
- une tige pointeau amovible traverse le poinçon mâle par son canal,
- la tige amovible est dotée d'une pointe de perforation de la matière organique et d'un organe de maintien de la matière découpée par l'emporte pièce, et percée par sa pointe, en sorte que la découpe et le perçage s'effectuant pendant le trajet du poinçon mâle vers la tête femelle, après solidarisation de ceux-ci, la tige amovible peut être extraite du canal du poinçon mâle en entraînant la matière organique découpée.

Suivant encore une autre caractéristique de l'invention, l'extrémité du poinçon mâle est dotée d'un embout percé en son centre, ledit embout ayant une forme extérieure tronconique et présentant un orifice, axial au canal du poinçon, en creux tronconique, le bord circulaire 12 dudit embout obtenu par la jonction des deux troncs de cône, définissant une arête 12 formant emporte-pièce.

Selon une autre caractéristique de l'invention, la pointe 15 de la tige pointeau amovible dans le canal du poinçon, présente une pointe 15 reliée à une portion retreinte 16, en arrière de ladite tête par un épaulement 17 orthogonal à l'axe de la tige.

Selon une autre caractéristique de l'invention, la pointe 15 de la tige pointeau lors de son enfoncement maximal dépasse l'arête 12 de l'embout emporte-pièce.

Selon une autre caractéristique de l'invention, la tige pointeau, pénétrant dans le poinçon, est dotée à son extrémité opposée à sa pointe des moyens 14 de fixation sur une des mâchoires de la pince de pose.

Selon une autre caractéristique de l'invention, la paroi du tronc de cône interne de l'embout forme avec l'axe transversal un angle compris entre 40° et 60°, de préférence 45°.

Selon une autre caractéristique de l'invention, l'étiquette auriculaire comporte une partie avec une tête femelle et une partie avec un poinçon mâle, les dites parties étant porteuses de moyens d'identification, le poinçon mâle se logeant de manière sécurisée, après passage à travers l'oreille, dans la tête femelle caractérisée essentiellement en ce que :
- le poinçon mâle est percé d'un canal axial débouchant sur la paroi et en extrémité du poinçon,
- l'organe de prélèvement de matière organique monté mobile dans le canal du poinçon mâle et séparable de celui-ci est constitué par une aiguille creuse en extrémité des moyens de fixation du dit organe de prélèvement sur une des mâchoires de la pince de pose.

Selon une autre caractéristique de l'invention, l'organe de prélèvement est doté à sa partie supérieure d'une paroi (19) recevant des moyens d'identification correspondant à ceux que possèdent les parties mâle et femelle de l'étiquette.

Selon une autre caractéristique de l'invention, l'une au moins des parties mâle ou femelle présente une paroi (1), le moyen d'identification associé à ladite partie étant porté par ladite paroi.

Selon une autre caractéristique de l'invention, l'organe de prélèvement est doté à sa partie supérieure de moyen de liaison sécurisé ou non avec un réceptacle dans lequel se loge l'extrémité de l'organe de prélèvement et la matière organique prélevée.

Selon une autre caractéristique de l'invention, le réceptacle dans lequel se loge au moins l'extrémité de l'organe de prélèvement supporte un moyen d'identification.

Selon une autre caractéristique de l'invention, les moyens d'identification sont des moyens visuels. Ainsi ces moyens d'identifications pourront prendre la forme d'inscription sous forme de caractères alphabétiques, ou numériques ou bien encore de code barre. Les différentes inscriptions pourront être identiques ou bien différentes mais alors corrélées.

Selon une autre caractéristique de l'invention, l'un au moins des moyens d'identifications est constitué par un transpondeur, comportant une identification électronique par exemple sous forme de numéro électronique, solidarisé à l'un des éléments des parties mâles ou femelles et/ou à la paroi (19) et/ou au réceptacle.

Ce transpondeur sera par exemple noyé dans la masse de l'un des éléments des parties mâles ou femelles ou dans la masse de la paroi (19) ou dans la masse du réceptacle, mais le transpondeur pourra être solidarisé à l'élément correspondant par tout autre moyen connu par exemple par collage.

Ce transpondeur sera pourvu d'une mémoire du type ROM ou EPROM dans laquelle sera inscrit le numéro électronique et d'un circuit émetteur approprié. Les informations contenues dans la mémoire, en l'espèce le numéro et éventuellement d'autres informations utiles à l'application envisagées, sont lues à distance par un appareil de lecture approprié.

D'autres avantages et caractéristiques de l'invention apparaîtront à la lecture de la description ci-après, d'une forme de réalisation de l'invention donnée à titre d'exemple non limitatif, et illustrée par les dessins joints dans lesquels :
- la figure 1 est une vue des mâchoires ouvertes d'une pince de pose d'étiquettes ou boucles auriculaires,
- la figure 2 est une vue de l'étiquette ou boucle avec poinçon mâle selon l'invention, et tige pointeau,
- les figures 3a à 3c représentent l'embout de la pointe du poinçon mâle,
- la figure 4 est une vue de la tige pointeau,
- la figure 5 est une vue de la tige pointeau suivant une autre forme de réalisation.
- la figure 6 est une vue d'une autre forme de réalisation de la partie mâle de l'étiquette selon l'invention ;
- la figure 7 est une vue en coupe de la figure 6 suivant le repère AA.

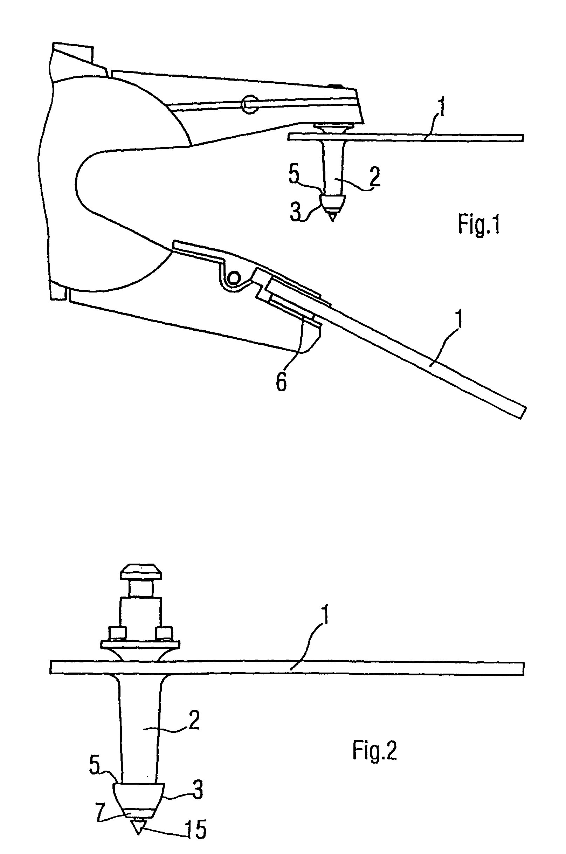

En figure 1 est représentée une vue partielle d'une pince de pose d'une étiquette auriculaire.

L'étiquette auriculaire également dénommée boucle est en deux parties :
- une partie dite mâle comprenant une première paroi 1 portant des indications d'identification de l'animal, et un poinçon 2 vertical dont la pointe 3 est dotée d'un épaulement 5,
- une partie femelle avec une seconde paroi 1 portant des indications identiques à la paroi de la partie mâle et une tête creuse 6 qui peut être indifféremment ouverte ou fermée.

Dans la figure 1, la tête femelle est placée dans un logement de la mâchoire, et la partie mâle est fixée à l'autre mâchoire de la pince.

La tête femelle comprend des moyens connus de blocage du poinçon de la partie mâle.

Selon l'invention, le poinçon mâle 2 est conformé en deux parties, l'une dans l'autre, séparables, dont une traverse la paroi auriculaire et se loge dans la tête femelle 6 pour solidariser les deux composantes de la boucle, et dont l'autre, entraînée par la première, passe également au travers de la paroi auriculaire prélevée et retient de la matière organique, cette partie est dénommée génériquement organe de prélèvement.

Par séparation des deux parties du poinçon qui s'effectue lorsque celui-ci est dans la tête femelle de la boucle, la matière organique est retirée et peut être ensuite stockée pour analyse, et par exemple détermination de l'ADN de l'animal concerné.

Avantageusement, une des deux parties du poinçon fonctionne comme un emporte-pièce qui découpe une portion du matériau organique, et l'organe de prélèvement retient ladite portion et permet de l'extraire.

De préférence, la partie constituant emporte-pièce est celle qui est logée dans la tête femelle de manière sécurisée connue.

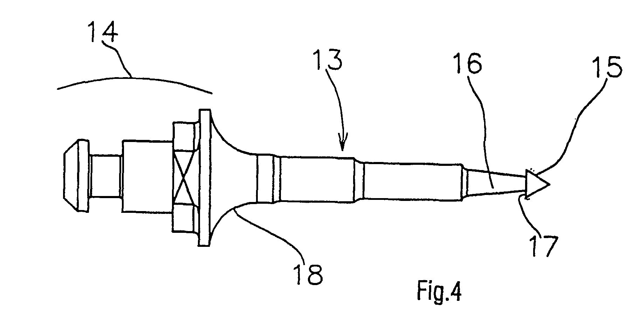

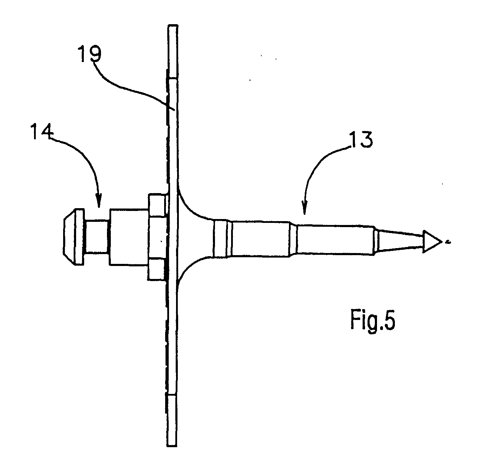

Comme représentés aux dessins, une des deux parties du poinçon est constituée par le fût cylindro-conique 2 qui est percé d'un canal axial, lequel débouche sur l'étiquette 1 à une extrémité et au bout de la pointe 3, l'autre partie est constituée par une tige pointeau représentée plus en détail aux figures 4 et 5.

L'épaulement 5 de la pointe 3 permet de sécuriser le poinçon mâle dans la tête femelle 6 de toute manière connue.
L'extrémité de la pointe 3 du poinçon mâle est dotée d'un embout 7 (fig. 2) qui est surmoulé.
De préférence, cet embout est métallique.

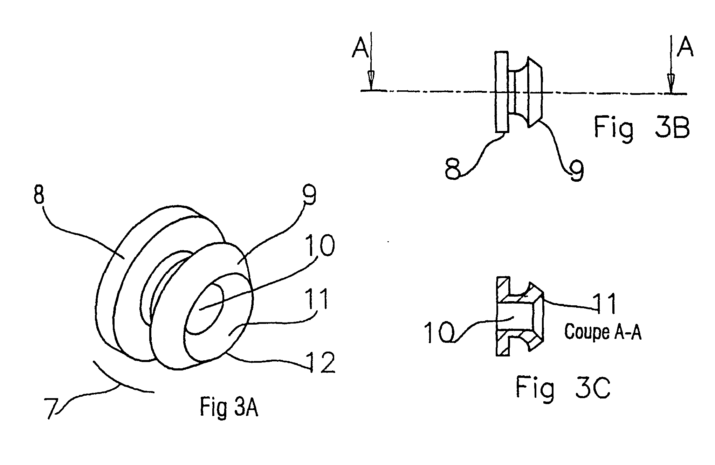

Les figures 3A, 3B, 3C représentent l'embout 7 qui présente une collerette 8 noyée dans le matériau du poinçon, et une extrémité extérieure 9 tronconique.

L'embout est percé d'un canal central 10 qui prolonge axialement le canal interne du poinçon.

L'embout présente un orifice 11 en creux tronconique.

Les parois 9 et 11 tronconiques sont orientées en sens inverse et définissent une arête 12 circulaire ou bord circulaire formant emporte pièce.
La tige pointeau 13 est constituée d'un fût métallique dont une extrémité dite supérieure présente des moyens 14 en eux-mêmes connus de montage dans la mâchoire concernée de la pince et dont l'autre extrémité présente une pointe 15.

Entre les organes 14 et la pointe 15, le fût de la tige pointeau est logé dans le canal axial du poinçon 2, les organes 14 dépassant de la paroi 1 et la pointe 15 faisant saillie hors de l'embout 7 ou venant au niveau de l'arête 12 de celui-ci.

De préférence, le fût de la tige pointeau présente, à l'arrière de la pointe 15, une partie retreinte 16 de plus faible diamètre que la pointe et la position supérieure du fut.

Un épaulement 17 à l'arrière de la pointe retient la matière organique à travers laquelle passe la pointe 15.
La pointe 15 étant de diamètre légèrement inférieur à celui du canal axial du poinçon 2 et de son embout, la matière se loge lors du retrait de la tige pointeau autour de la partie retreinte 16 dans le canal axial.

La tige pointeau est dotée, à la partie supérieure de son fut, d'une portion conique 18 qui limite sa pénétration dans le canal, en sorte que lors de la mise en place de l'étiquette, la pointe 15 dépasse d'une petite valeur l'arête 12 de l'embout et que son épaulement 17 puisse s'engager dans la matière organique.

En fonctionnement, lorsque le poinçon vient au contact de la paroi auriculaire, l'arête de l'embout découpe celle-ci tandis que la pointe la transperce et la fixe sur l'épaulement.

Après pénétration du poinçon mâle dans la tête femelle et enlèvement de la pince, l'utilisateur retire la tige pointeau du canal et peut stocker celle-ci avec la matière organique.

Ce stockage peut être effectué dans un réceptacle tubulaire, avec ou sans matériau interne de conservation, de diamètre correspondant à celui de la partie supérieure du fût 13, ce qui permet un blocage par coincement.

Tout autre mode et moyen de sécurisation du réceptacle sur le fût pourra être utilisé, par exemple un vissage avec pas de vis sur le fût et dans le conteneur.

En figure 5 est représenté une forme de réalisation de la tige pointeau qui est dotée, entre le fût 13 et les organes 14 de fixation à la mâchoire de la pince, d'une paroi 19 qui porte les mêmes mentions d'identification que l'étiquette auriculaire ou des identifications corrélées.

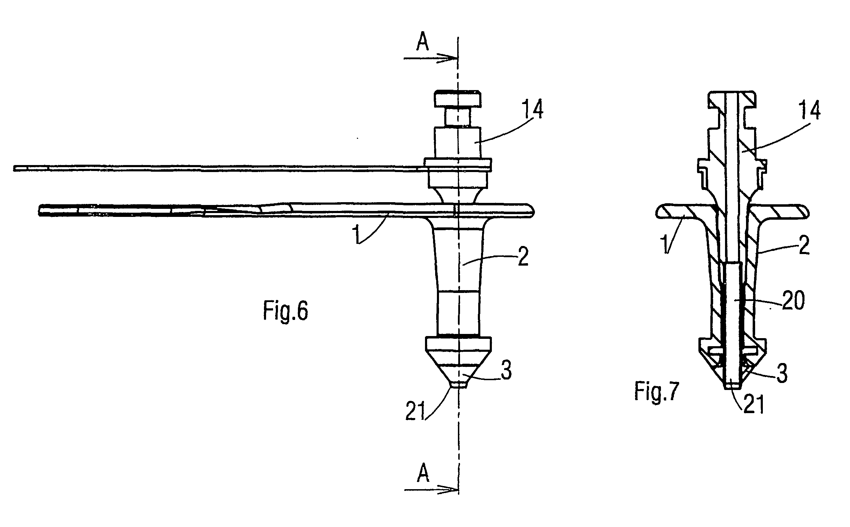

Aux figures 6 et 7 est représentée une autre forme de réalisation de l'étiquette auriculaire selon l'invention dans laquelle le poinçon mâle 2 percé d'un canal axial débouchant sur la paroi 1 et en extrémité 3 du poinçon reçoit un organe de prélèvement de matière organique monté mobile dans le canal du poinçon mâle 2 et séparable de celui-ci qui est constitué par une aiguille creuse 20 reliée aux moyens 14 de fixation du dit organe de prélèvement sur une des mâchoires de la pince de pose.

Avantageusement, l'extrémité de l'aiguille creuse 20 est tranchante et dépasse en saillie repéré par 21 l'extrémité 3 du poinçon mâle en sorte qu'elle effectue le perçage de la paroi auriculaire, la découpe et la rétention de matière organique pendant le trajet du poinçon mâle 2 vers la tête femelle.

Après fixation de la partie mâle dans la partie femelle, l'organe de prélèvement est extrait du canal du poinçon mâle vers l'arrière par rapport à son extrémité 3 bloquée dans la tête femelle à travers la paroi 1 de la partie mâle.

Il va de soi que la présente invention peut recevoir tous aménagements et variantes du domaine des équivalents techniques, sans pour autant sortir du cadre de la présente invention telle que définie dans les revendications ci-jointes.

## Revendications

1. Étiquette auriculaire de marquage des animaux comprenant une partie femelle constituée par une tête femelle (6) portée par ou formée dans une première paroi (1), une partie mâle constituée par un poinçon mâle (2) porté par ou formé dans une seconde paroi (1), des moyens d'identification étant portés par l'un au moins des éléments mâle ou femelle, **caractérisée en ce que** le poinçon mâle (2) est conformé en deux éléments séparables, dont un se bloque dans la tête femelle et dont l'autre est un organe de prélèvement de matière organique lors du passage du poinçon mâle (2) à travers la paroi auriculaire qui est mobile dans un canal axial du précédent et se retire à travers la paroi (1) de la partie mâle après fixation de l'étiquette sur l'oreille de l'animal.

2. Étiquette auriculaire de marquage des animaux selon la revendication 1 comprenant une partie avec une tête femelle et une partie avec un poinçon mâle, lesdites parties étant porteuses des moyens d'identification, le poinçon mâle se logeant de manière sécurisée, après passage à travers l'oreille dans la tête femelle **caractérisée en ce que** :
- le poinçon mâle (2) est percé d'un canal axial débouchant sur la paroi (1) et en extrémité (3) du poinçon,
- l'extrémité (3) du poinçon est conformée en un emporte pièce,
- une tige pointeau (13) amovible traverse le poinçon mâle (2) par son canal,
- la tige amovible est dotée d'une pointe (15) de perforation de la matière organique et d'un organe (5) de maintien de la matière découpée par l'emporte pièce, et percée par sa pointe, en sorte que la découpe et le perçage s'effectuant pendant le trajet du poinçon mâle vers la tête femelle, après solidarisation de ceux-ci, la tige amovible peut être extraite du canal du poinçon mâle en entraînant la matière organique découpée.

3. Étiquette auriculaire selon les revendications 1 et 2, **caractérisée en ce que** l'extrémité du poinçon mâle est dotée d'un embout (7) percé en son centre, ledit embout ayant une forme extérieure tronconique et présentant un orifice (10), axial au canal du poinçon, en creux tronconique, le bord circulaire (12) dudit embout obtenu par la jonction des deux troncs de cône définissant une arête (12) formant emporte pièce.

4. Étiquette auriculaire selon les revendications 1 et 2, **caractérisée en ce que** la tige pointeau amovible dans le canal du poinçon présente une pointe (15) reliée à une portion retreinte (16), en arrière de ladite tête par un épaulement (17) orthogonal à l'axe de la tige.

5. Étiquette auriculaire selon l'une quelconque des revendications 1, 2, 3 et 4, **caractérisée en ce que** la pointe (15) de la tige pointeau lors de son enfoncement maximal dépasse l'arête (12) de l'embout emporte-pièce.

6. Étiquette auriculaire selon l'une quelconque des revendications 2, 3, 4, 5 **caractérisée en ce que** la tige pointeau pénétrant dans le poinçon est dotée à son extrémité opposée à sa pointe, des moyens (14) de fixation sur une des mâchoires de la pince de pose.

7. Étiquette auriculaire selon l'une quelconque des revendications précédentes, **caractérisée en ce que** la paroi du tronc de cône interne de l'embout forme avec l'axe transversal un angle compris entre 40° et 60° et de préférence de 45°.

8. Etiquette auriculaire selon la revendication 1 comportant une partie avec une tête femelle (6) et une partie avec un poinçon mâle (2), les dites parties étant porteuses de moyens d'identification, le poinçon mâle (2) se logeant de manière sécurisée, après passage à travers l'oreille, dans la tête femelle **caractérisée en ce que** :
- le poinçon mâle (2) est percé d'un canal axial débouchant sur la paroi (1) et en extrémité (3) du poinçon,
- l'organe de prélèvement de matière organique monté mobile dans le canal du poinçon mâle (2) et séparable de celui-ci est constitué par une aiguille creuse (20) en extrémité des moyens (14) de fixation du dit organe de prélèvement sur une des mâchoires de la pince de pose.

9. Etiquette auriculaire selon la revendication 8 **caractérisée en ce que** l'extrémité de l'aiguille creuse (20) est tranchante et dépasse en saillie l'extrémité (3) du poinçon mâle en sorte qu'elle effectue le perçage de la paroi auriculaire et la découpe de matière organique pendant le trajet du poinçon mâle vers la tête femelle et qu'après solidarisation de ceux-ci, l'organe de prélèvement est extrait du canal du poinçon mâle en entraînant la matière organique.

10. Étiquette auriculaire selon la revendication 1 et l'une quelconque des revendications précédentes, **caractérisée en ce que** l'organe de prélèvement est doté à sa partie supérieure d'une paroi (19) recevant des moyens d'identification correspondant à ceux que possèdent les parties mâle et femelle de l'étiquette.

11. Étiquette auriculaire selon l'une quelconque des revendications précédentes, **caractérisée en ce que** l'une au moins des parties mâle ou femelle présente une paroi (1), le moyen d'identification associé à ladite partie étant porté par ladite paroi.

12. Étiquette auriculaire selon l'une quelconque des revendications précédentes, **caractérisée en ce que** l'organe de prélèvement est doté à sa partie supérieure de moyen de liaison sécurisé ou non avec un réceptacle dans lequel se loge au moins l'extrémité du dit organe et la matière organique prélevée.

13. Étiquette auriculaire selon la revendication 12, **caractérisée en ce que** le réceptacle dans lequel se loge au moins l'extrémité de l'organe de prélèvement est doté d'un moyen d'identification.

14. Étiquette auriculaire selon l'une quelconque des revendications précédentes, **caractérisée en ce que** les moyens d'identification sont des moyens visuels.

15. Étiquette auriculaire selon l'une quelconque des revendications précédentes, **caractérisée en ce que** l'un au moins des moyens d'identifications est constitué par un transpondeur, avec numéro électronique, solidarisé à l'un des éléments des parties mâle ou femelle et/ou à la paroi (19) et/ou au réceptacle.

## Claims

1. An ear tag for marking animals comprising a female portion consisting of a female head (6) optionally borne by or formed in a first wall (1), a male portion consisting of a male punch (6) optionally borne by or formed in a second wall (1), identifying means being borne by at least one of the male or female elements, **characterised in that** the male punch (2) is configured in two separable elements, one of which is housed in the female head and the other forms an organic matter sampling device during the passage of the male punch (2) through the ear wall, which is moveable in an axial channel thereof and is withdrawn through the wall (1) of the male portion after fastening the tag onto the animal's ear.

2. An ear tag for marking animals according to Claim 1, comprising a portion with a female head and a portion with a male punch, said portions bearing identifying means, the male punch being housed in a secure manner in the female head after passing through the ear, **characterised in that**
the male punch (2) is pierced by an axial channel emerging in the wall (I) and at the end (3) of the punch;
the end (3) of the punch forms a cutting die;
a removable prick punch (13) passes through the channel in the male punch (2);
the removable prick punch has a tip (15) for piercing the organic matter and a means (5) for holding the matter punched out by the cutting die and pierced by its tip, so that the cutting and the piercing are carried out as the male punch moves towards the female head, and after these have been locked together, the removable prick punch may be extracted from the channel in the male punch carrying with it the organic matter that has been cut out.

3. An ear tag according to Claims 1 and 2, **characterised in that** the end of the male punch is provided with an end piece (7) pierced through the centre, said end piece having a frustoconical exterior and displaying an orifice (10) axial to the channel in the punch, in the form of a frustoconical cavity, the circular edge (12) of said end piece obtained by the junction of the two conic frustums defining a ridge (12) that forms a cutting die.

4. An ear tag according to Claims 1 and 2, **characterised in that** the tip of the removable prick punch in the channel of the punch presents a tip (15) joined to a necked portion (16) behind said head by a collar (17) orthogonal to the axis of the shaft.

5. An ear tag according to any one of Claims 1, 2, 3 or 4, **characterised in that** the tip (15) of the prick punch, when fully inserted, projects from the ridge (12) of the cutting die end piece.

6. An ear tag according to any one of Claims 2 to 5, **characterised in that** the prick punch passing through the punch is provided with means (14) for affixing it to one of the jaws of the applicator pliers on the opposite end to the tip.

7. An ear tag according to any one of the preceding Claims, **characterised in that** the wall of the internal frustum of the end piece forms an angle of between 40° and 60°, and preferably 45°, with the transversal axis.

8. An ear tag according to Claim 1 comprising a portion with a female head (6) and a portion with a male punch (2), said portions bearing identifying means, the male punch (2) being housed in a secure manner in the female head after passing through the ear,
**characterised in that**
the male punch (2) is pierced by an axial channel emerging in the wall (1) and at the end (3) of the punch;
the organic matter sampling device, mounted in a manner that enables it to move freely within the channel of the male punch (2) and being separable therefrom, comprises a hollow needle (20) at the end of the fixing means (14) of said sampling device on one of the jaws of the applicator pliers.

9. An ear tag according to Claim 8, **characterised in that** the end of the hollow needle (20) is sharp and protrudes from the end (3) of the male punch so that it pierces the ear wall and cuts out the organic matter during the passage of the male punch towards the female head, and after these have been locked together, the sampling device is extracted from the channel in the male punch carrying with it the organic matter.

10. An ear tag according to Claim 1 and any one of the preceding Claims, **characterised in that** the sampling device has on its upper portion a wall (19) provided with identifying means corresponding to those on the male and female portions of the tag.

11. An ear tag according to any one of the preceding Claims, **characterised in that** at least one of the male or female portions presents a wall (1), the identifying means associated with said portion being borne on said wall.

12. An ear tag according to any one of the preceding Claims, **characterised in that** the sampling device has on its upper part means to connect it, whether in a secured manner or not, with a receptacle in which at least the end of said device and the sample of organic matter is housed.

13. An ear tag according to Claim 12, **characterised in that** the receptacle in which is housed at least the end of the sampling device, carries an identifying means.

14. An ear tag according to any one of the preceding Claims, **characterised in that** the identifying means are visual means.

15. An ear tag according to any one of the preceding Claims, **characterised in that** one at least of the identifying means consists of a transponder, with an electronic number, attached to one of the elements of the male or female portions and/or to the wall (19) and/or to the receptacle.

## Patentansprüche

1. Ohrmarke zur Kennzeichnung von Tieren, bestehend aus einem Steckteil in Form einer Aufnahme (6), die sich auf einer ersten Platte (1) befindet oder in dieser ausgeformt ist, und einem Steckerteil in Form eines Stanzinstruments oder Doms (2), der sich auf einer zweiten Platte (1) befindet oder von dieser gebildet wird, wobei die Kennzeichnung zumindest auf einer der beiden Platten angebracht ist, **dadurch gekennzeichnet, dass** der Steckerteil (2) sich aus zwei separaten Elementen zusammensetzt, von denen sich das eine unlösbar mit dem Steckteil (6) verbindet, während das andere zum Ausstanzen eines Hautstücks aus dem Ohr des Tieres beim Durchführen des Steckerteils (2) dient und im Inneren dieses Steckerteils verschiebbar ist; nach der Befestigung der Marke im Ohr des Tieres kann dieses Stanzinstrument durch die mit dem Steckerteil versehene Platte (1) hindurch entnommen werden.

2. Ohrmarke zur Kennzeichnung von Tieren gemäß der Anforderung 1, bestehend aus einem Element mit einem Steckteil und einem Element mit einem Steckerteil, die mit einer Kennzeichnung versehen sind, wobei der Steckerteil sich nach dem Durchführen durch das Ohr des Tieres unlösbar mit dem Steckteil verbindet, **dadurch gekennzeichnet, dass** :
- der Steckerteil (2) in der Mitte einen Kanal besitzt, der von der Platte (1) zur Spitze (3) des Doms führt,
- die Spitze (3) des Doms als Lochstanzer ausgelegt ist,
- sich im Kanal des Steckerteils (2) eine herausziehbare Stanznadel (13) befindet,
- die herausziehbare Stanznadel eine Spitze (15) zum Durchbohren des Ohres sowie ein Element (5) zum Festhalten des von der Spitze durchdrungenen und ausgestanzten Gewebes besitzt, so dass das Ausstanzen und das Durchbohren während des Durchführens und Einbringens des Steckerteils in das Steckteil erfolgen; nach dem Verbinden dieser beiden Teile kann die herausziehbare Stanznadel aus dem Kanal des Steckerteils herausgenommen werden, wobei das ausgestanzte Gewebe mit entnommen wird.

3. Ohrmarke gemäß den Anforderungen 1 und 2, **dadurch gekennzeichnet, dass** das Ende des Steckerteils mit einer in der Mitte durchbohrten Spitze (7) versehen ist, deren Außenseite eine kegelstumpfartige Form hat und eine kegelstumpfförmige Öffnung (10) besitzt, in deren Zentrum sich der Kanal des Lochstanzers befindet, wobei der durch das Zusammentreffen der beiden Kegelstümpfe gebildete Rand (12) dieser Spitze einen zum Ausstanzen dienenden scharfen Grat (12) bildet.

4. Ohrmarke gemäß den Anforderungen 1 und 2, **dadurch gekennzeichnet, dass** die herausziehbare Stanznadel im Kanal des Steckerteils mit einer Spitze (15) versehen ist, die durch einen rechtwinklig zur Achse der Nadel stehenden Absatz (17) mit einem verjüngten Abschnitt (16) hinter dem Kopf der Spitze verbunden ist.

5. Ohrmarke gemäß einer der Anforderungen 1, 2, 3 und 4, **dadurch gekennzeichnet, dass** die Spitze (15) der Stanznadel beim maximalen Eindrücken über den Stanzrand (12) des Lochstanzers herausragt.

6. Ohrmarke gemäß einer der Anforderungen 2, 3, 4, 5, **dadurch gekennzeichnet, dass** die Stanznadel, die in das Steckerteil eingeführt wird, an dem der Spitze gegenüberliegenden Ende mit einer Vorrichtung (14) zur Befestigung an der Markierungszange versehen ist.

7. Ohrmarke gemäß einer der vorstehenden Anforderungen, **dadurch gekennzeichnet, dass** die Wand des inneren Kegelstumpfes der Stanzspitze mit der Querachse einen Winkel zwischen 40° und 60°, vorzugsweise von 45°, bildet.

8. Die Ohrmarke gemäß Anforderung 1 besteht aus einer Platte mit einem Steckteil (6) und einer Platte mit einem Steckerteil in Form eines Stanzinstruments oder Doms (2), auf denen eine Kennzeichnung angebracht ist, wobei der Steckerteil (2) nach dem Durchbohren des Ohrs unlösbar mit dem Steckteil verbunden wird, **dadurch gekennzeichnet, dass** :
- der Steckerteil (2) in der Mitte einen Kanal besitzt, der von der Platte (1) zur Spitze (3) des Doms führt,
- das Instrument zum Ausstanzen des Gewebes beweglich im Kanal des Steckerteils (2) montiert ist und aus diesem herausgenommen werden kann; es besteht aus einer Hohlnadel (20), an deren Ende sich eine Vorrichtung (14) zur Befestigung dieses Instruments an einer der Backen der Markierungszange befindet.

9. Ohrmarke gemäß Anforderung 8, **dadurch gekennzeichnet, dass** die Spitze der Hohlnadel (20) scharfkantig ist und über das Ende (3) des Steckerteils übersteht, so dass sie das Gewebe des Ohrs beim Durchführen des Steckerteils zum Steckteil durchstößt und ausstanzt und nach dem Verbinden der beiden Elemente die Nadel aus dem Kanal des Steckerteils herausgenommen werden kann, wobei das ausgestanzte Gewebe mit entnommen wird.

10. Ohrmarke gemäß Anforderung 1 und einer der anderen vorstehenden Anforderungen; **dadurch gekennzeichnet, dass** das Stanzinstrument im oberen Bereich eine Platte (19) besitzt, an der Kennzeichnungen angebracht werden, die denen auf dem Steckteil und dem Steckerteil der Ohrmarke entsprechen.

11. Ohrmarke gemäß einer der vorstehenden Anforderungen, **dadurch gekennzeichnet, dass** zumindest eines der beiden Elemente, Steckteil und/oder Steckerteil, mit einer Platte (1) versehen ist und die zu diesem Element gehörende Kennzeichnung auf dieser Platte angebracht ist.

12. Ohrmarke gemäß einer der vorstehenden Anforderungen, **dadurch gekennzeichnet, dass** das Stanzinstrument im oberen Bereich mit einer gesicherten oder nicht gesicherten Verbindung zu einem Aufnahmebehälter versehen ist, der zumindest die Spitze dieses Instruments sowie das ausgestanzte Gewebe aufnimmt.

13. Ohrmarke gemäß Anforderung 12, **dadurch gekennzeichnet, dass** der Behälter zur Aufnahme der Spitze des Stanzinstrumentes mit einer Kennzeichnung versehen ist.

14. Ohrmarke gemäß einer der vorstehenden Anforderungen, **dadurch gekennzeichnet, dass** es sich bei den Kennzeichnungen um visuell lesbare Markierungen handelt.

15. Ohrmarke gemäß einer der vorstehenden Anforderungen, **dadurch gekennzeichnet, dass** zumindest eine der Kennzeichnungen aus einem Transponder mit einer elektronischen Nummer besteht, der mit einem der Elemente des Steck- oder des Steckerteils und/oder mit der Platte (19) und/oder dem Behälter fest verbunden ist.
